# FASCICULE DE BREVET EUROPEEN

(11) **EP 1 095 690 B1**
(45) Date de publication et mention de la délivrance du brevet: **04.04.2007**
(21) Numéro de dépôt: 00402895.7
(22) Date de dépôt: 19.10.2000
(51) Int. Cl.: B01D 53/047, B01D 53/04, F25J 3/04

(54) **Procédé d'épuration d'un gaz et dispositif correspondant**
Verfahren zum Reinigen eines Gases und entsprechende Vorrichtung
Process for purifying a gas and corresponding apparatus

(30) Priorité: 25.10.1999 FR 9913274
(43) Date de publication de la demande: 02.05.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Guillard, Alain, 75016 Paris (FR); Le Bot, Patrick, 94300 Vincennes (FR)
(74) Mandataire: Mercey, Fiona Susan

(56) Documents cités:
- EP-A- 0 579 290
- EP-A- 0 612 554
- EP-A- 0 904 823
- US-A- 5 906 673

## Description

La présente invention concerne un procédé d'épuration d'un gaz par adsorption d'une première impureté et d'une deuxième impureté, du type dans lequel on utilise cycliquement plusieurs adsorbeurs sélectivement en phase d'adsorption et en phase de régénération.

L'invention s'applique, par exemple, à l'épuration d'air en vue de sa distillation.

Pour une telle application, il est connu d'utiliser un dispositif d'épuration comprenant deux adsorbeurs identiques dont le fonctionnement est alterné, c'est à dire que l'un est en phase d'adsorption pendant que l'autre est en phase de régénération.

Lorsque le débit d'air à traiter est important, il est également connu d'utiliser quatre adsorbeurs identiques, couplés par paires. Les deux adsorbeurs d'une même paire fonctionnent en parallèle. Le fonctionnement des deux paires d'adsorbeurs est alterné, de sorte qu'une paire d'adsorbeurs est en phase d'adsorption pendant que l'autre est en phase de régénération. Un tel fonctionnement en parallèle permet de traiter des débits importants en limitant les contraintes de fabrication des adsorbeurs.

Les documents EP-A-0904823 et EP-A-0579290 décrivent un procédé d'adsorption avec plusieurs adsorbeurs principaux connectés en série avec des adsorbeurs auxiliaires.

Un but de l'invention est de fournir un procédé du type précité qui permette, notamment, de réduire encore plus les coûts de fabrication ou de fonctionnement d'une installation de distillation d'air dans laquelle le procédé est mis en oeuvre.

A cet effet, l'invention a pour objet un procédé du type précité, caractérisé en ce que l'on utilise au moins deux adsorbeurs principaux et au moins un adsorbeur auxiliaire, en ce que, pendant au moins une première étape, on épure le gaz en adsorbant les deux impuretés par passage dans au moins un premier des adsorbeurs principaux sans passer par l'adsorbeur auxiliaire ou sans passer par aucun des adsorbeurs auxiliaires, le cas échéant, et simultanément on régénère en parallèle le deuxième adsorbeur principal et le ou chaque adsorbeur auxiliaire, puis, pendant une deuxième étape, on épure au moins une partie du débit du gaz par adsorption des deux impuretés par passage en série dans le premier adsorbeur principal et dans le premier adsorbeur auxiliaire.

Selon des modes particuliers de réalisation, le procédé peut comprendre l'une ou plusieurs des caractéristiques suivantes, prise(s) isolément ou selon toutes les combinaisons techniquement possibles :
- pendant la deuxième étape, on modifie la pression du gaz entre le premier adsorbeur principal et le premier adsorbeur auxiliaire ;
- pendant la deuxième étape, on comprime le gaz entre le premier adsorbeur principal et le premier adsorbeur auxiliaire ;
- on utilise un seul adsorbeur auxiliaire ;
- entre la première étape et la deuxième étape, on épure le gaz en adsorbant les deux impuretés par passage dans un deuxième adsorbeur principal ;
- on utilise au moins deux adsorbeurs auxiliaires ;
- on interrompt la première étape lorsque le premier adsorbeur principal est sensiblement saturé en deuxième impureté;
- chaque adsorbeur auxiliaire comprend un garnissage d'adsorption comprenant un matériau adsorbant unique ;
- la première impureté est H₂O et la deuxième impureté CO₂ ;et
- le gaz est de l'air.

L'invention a en outre pour objet un dispositif d'épuration d'un gaz pour la mise en oeuvre d'un procédé tel que défini ci-dessus, caractérisé en ce qu'il comprend une ligne d'amenée du gaz à épurer, une ligne d'évacuation du gaz épuré, une ligne d'amenée d'un gaz de régénération, une ligne d'évacuation du gaz de régénération, au moins deux adsorbeurs principaux et au moins un adsorbeur auxiliaire, les adsorbeurs principaux comprenant un garnissage d'adsorption des première et deuxième impuretés et chaque adsorbeur auxiliaire comprenant un garnissage d'adsorption d'au moins la deuxième impureté, et en ce que le dispositif comprend en outre des premiers moyens de raccordement, pour raccorder les adsorbeurs principaux à la ligne d'évacuation du gaz épuré sans passer par l'adsorbeur auxiliaire ou sans passer par aucun des adsorbeurs auxiliaires, le cas echéant sans passer par aucun des adsorbeurs auxiliaires, des deuxièmes moyens de raccordement, pour raccorder en série chaque adsorbeur principal avec un adsorbeur auxiliaire, et des troisièmes moyens de raccordement, pour raccorder en parallèle le ou chaque adsorbeur auxiliaire et au moins un adsorbeur principal à la ligne d'amenée du gaz de régénération.

Selon des modes particuliers de réalisation, le dispositif peut comprendre l'une ou plusieurs des caractéristiques suivantes, prise(s) isolément selon toutes les combinaisons techniquement possibles :
- lesdits deuxièmes moyens de raccordement comprennent des moyens pour modifier la pression du gaz ;
- lesdits deuxièmes moyens de raccordement comprennent des moyens de compression ;
- le dispositif d'épuration comprend un seul adsorbeur auxiliaire ;
- le dispositif d'épuration comprend au moins deux adsorbeurs auxiliaires ;
- chaque adsorbeur auxiliaire comprend un garnissage d'adsorption comprenant un matériau adsorbant unique ;
- la première impureté est H₂O et la deuxième impureté CO₂; et
- le gaz est de l'air.

L'invention sera mieux comprise à la lecture de la description qui va suivre, donnée uniquement à titre d'exemple, et faite en se référant aux dessins annexés, sur lesquels :
- la figure 1 est vue schématique d'un dispositif d'épuration selon l'invention, et
- les figures 2 à 5 sont des vues analogues à la figure 1 illustrant deux variantes du dispositif du procédé de la figure 1 et deux variantes d'un autre mode de réalisation de l'invention.

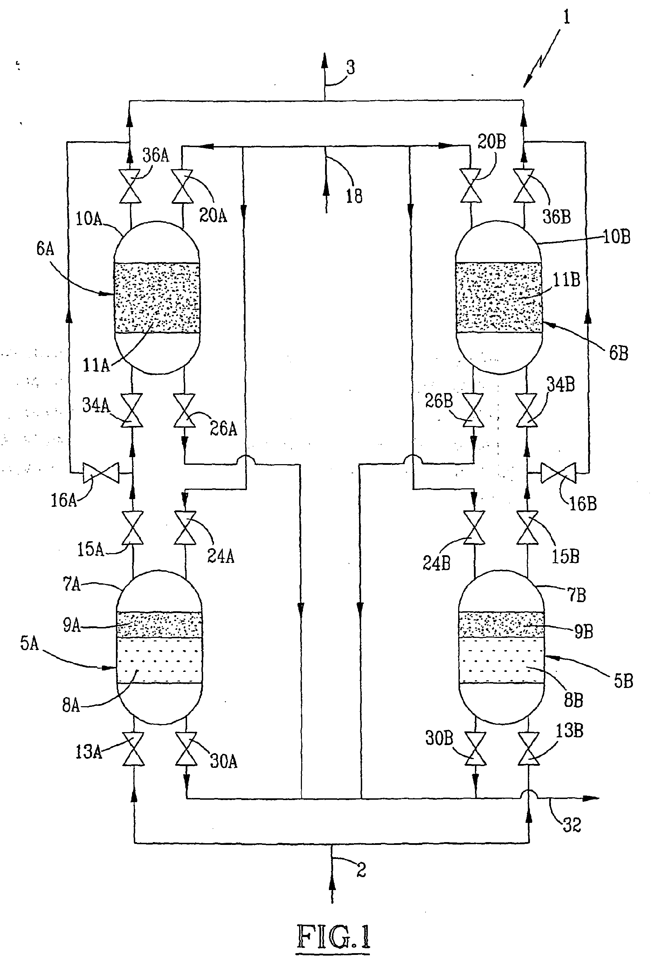

La figure 1 représente un dispositif d'épuration 1 d'une installation de distillation d'air. Ce dispositif 1 peut fonctionner par variation de température et/ou de pression. Ce dispositif 1 est destiné à éliminer la majorité des impuretés, et notamment l'H₂O et le CO₂, contenues dans un flux d'air comprimé à une pression comprise entre 4 et 50 bar et amené par une ligne 2, pour alimenter, via une ligne 3, une ligne principale d'échange thermique puis un appareil de distillation d'air. Ces derniers éléments ne sont pas représentés pour ne pas surcharger la figure 1. L'appareil de distillation d'air peut être, par exemple, une colonne moyenne pression d'une double colonne de distillation d'air.

Le dispositif d'épuration 1 comprend deux adsorbeurs principaux 5A et 5B identiques, et deux adsorbeurs auxiliaires 6A et 6B identiques.

Chaque adsorbeur principal 5A, B comprend un récipient ou bouteille 7A, B contenant successivement, dans le sens d'adsorption qui est vertical et dirigé vers le haut, une couche 8A, B d'un matériau capable d'adsorber l'H₂O, par exemple de l'alumine, et une couche 9A, B d'un matériau capable d'adsorber le CO₂, par exemple un tamis moléculaire. La couche 8A, B a une épaisseur nettement supérieure à celle de la couche 9A, B. Dans des variantes non représentées, le matériau des couches 8A, B et 9A, B peut être analogue. Il s'agit alors d'un matériau capable d'adsorber les deux impuretés. Ainsi, le matériau de la couche 8A, B représente de manière générale entre 60% et 100% du garnissage d'adsorption chargé dans le récipient 7A, B.

Chaque adsorbeur auxiliaire 6A, B comprend un récipient 10A, B dans lequel est disposée une couche unique 11A, B d'un matériau capable d'adsorber le CO₂, par exemple le même matériau que celui des couches 9A et 9B.

Le dispositif d'épuration 1 comprend en outre un certain nombre de conduites de raccordement et de vannes dont la disposition va apparaître maintenant lors de la description du procédé mis en oeuvre dans le dispositif d'épuration 1.

Ce procédé est obtenu par répétition d'un cycle comprenant quatre étapes successives I à IV.

Lors de l'étape I, l'adsorbeur principal 5A est en phase d'adsorption, tandis que l'adsorbeur principal 5B et les adsorbeurs auxiliaires 6A et 6B sont en phase de régénération.

L'air de la ligne 2 est alors amené par une vanne 13A ouverte dans l'adsorbeur principal 5A. L'air traverse successivement la couche 8A, où l'H₂O est entièrement adsorbé, puis la couche 9A, où le CO₂ est entièrement adsorbé. L'air épuré, c'est à dire dessiqué et décarbonaté, est alors renvoyé par l'intermédiaire de deux vannes 15A et 16A ouvertes directement vers la ligne 3, c'est à dire sans passer par un autre adsorbeur.

Pendant ce temps, de l'azote résiduaire éventuellement chauffé et canalisé par une ligne 18 et, provenant, par exemple, de la tête de la colonne basse pression de l'installation de distillation d'air, alimente en parallèle :
- les adsorbeurs auxiliaires 6A et 6B, via deux vannes 20A et 20B ouvertes, et
- l'adsorbeur principal 5B via une vanne 24B ouverte.

Cet azote résiduaire circule dans les adsorbeurs 5B, 6A et 6B dans le sens de régénération, c'est à dire dans le sens contraire au sens d'adsorption, en assurant la régénération de ces adsorbeurs dont les couches 8B, 9B, 11A et 11B ont été sensiblement saturées lors d'un cycle précédent.

L'azote résiduaire transportant l'H₂O et le CO₂ désorbés est ensuite renvoyé, d'une part, des adsorbeurs auxiliaires 6A et 6B via des vannes 26A et 26B ouvertes, et d'autre part, de l'adsorbeur principal 5B via une vanne 30B ouverte, vers une ligne 32 d'évacuation.

Cette étape I est poursuivie jusqu'à ce que la couche 9A soit sensiblement saturée en CO₂ et que l'adsorbeur 6A soit régénéré.

Lors de l'étape II, les vannes 16A, 20A et 26A sont fermées et l'air, dessiqué par la couche 8A et sortant de l'adsorbeur principal 5A, est renvoyé vers l'adsorbeur auxiliaire 6A par une vanne 34A ouverte. L'épuration de l'air y est alors poursuivie par adsorption du CO₂ dans la couche 11A. L'air dessiqué et décarbonaté sortant de l'adsorbeur auxiliaire 6A est alors renvoyé via une vanne 36A ouverte directement vers la ligne 3.

Au cours de l'étape II, l'adsorbeur auxiliaire 6A est donc en phase d'adsorption pour épurer l'air en série avec l'adsorbeur principal 5A.

Les adsorbeurs principal 5B et auxiliaire 6B sont, comme dans l'étape I, régénérés en parallèle. Cette étape II se poursuit jusqu'à ce que la couche 8A soit sensiblement saturée en H₂O ou que la couche 11A soit sensiblement saturée en CO₂, et que l'adsorbeur principal 5B soit régénéré.

Au cours de l'étape III, l'adsorbeur 5B est en phase d'adsorption, assurant à lui seul l'épuration de l'air de la ligne 2.

Les adsorbeurs 5A, 6A et 6B sont régénérés en parallèle. Le trajet de l'air et de l'azote résiduaire peut être déduit de la description de l'étape I en intervertissant les suffixes A et B.

Cette étape III se poursuit jusqu'à ce que la couche 9B soit sensiblement saturée en CO₂ et que l'adsorbeur 6B soit régénéré.

Au cours de l'étape IV, les adsorbeurs principal 5B et auxiliaire 6B assurent en série l'épuration de l'air de la ligne 2, les adsorbeurs principal 5A et auxiliaire 6A étant en phase de régénération. Les trajet de l'air et de l'azote résiduaire peuvent être déduits de la description de l'étape Il en intervertissant les suffixes A et B.

L'étape IV se poursuit jusqu'à ce que l'adsorbeur 5A soit régénéré et que la couche 8B soit sensiblement saturée en H₂O ou que la couche 11B soit sensiblement saturée en CO₂.

Au cours des étapes I et III, la perte de charge entre les lignes 2 et 3 est limitée puisque l'épuration de l'air n'est assurée que par l'adsorbeur principal 5A ou 5B qui sont de dimensions réduites.

Par ailleurs, les adsorbeurs principaux 5A et 5B sont régénérés pendant la moitié du cycle, mais les adsorbeurs auxiliaires 6A et 6B sont régénérés pendant trois étapes du cycle, à savoir les étapes I, III et IV pour l'adsorbeur auxiliaire 6A et les étapes I, II et III pour l'adsorbeur 6B. En raison du temps de régénération relativement long de ces adsorbeurs auxiliaires 6A et 6B, le débit d'azote résiduaire, nécessaire à la régénération et circulant dans la ligne 18, est réduit. Par conséquent, les pertes de charge en amont de la ligne 18 sont également réduites.

Ainsi, les coûts liés à la compression de l'air dans l'installation de distillation sont réduits.

Par ailleurs, l'air circulant dans les adsorbeurs auxiliaires 6A et 6B est dessiqué. Il n'y a donc pas d'H₂O à désorber des adsorbeurs 6A et 6B. Ainsi, le sens de régénération dans les adsorbeurs auxiliaires 6A et 6B peut être dirigé vers le haut. Le sens d'adsorption dans les adsorbeurs 6A et 6B peut donc être dirigé vers le bas ce qui permet d'augmenter la vitesse d'adsorption et donc de réduire les dimensions des récipients 10A et 10B.

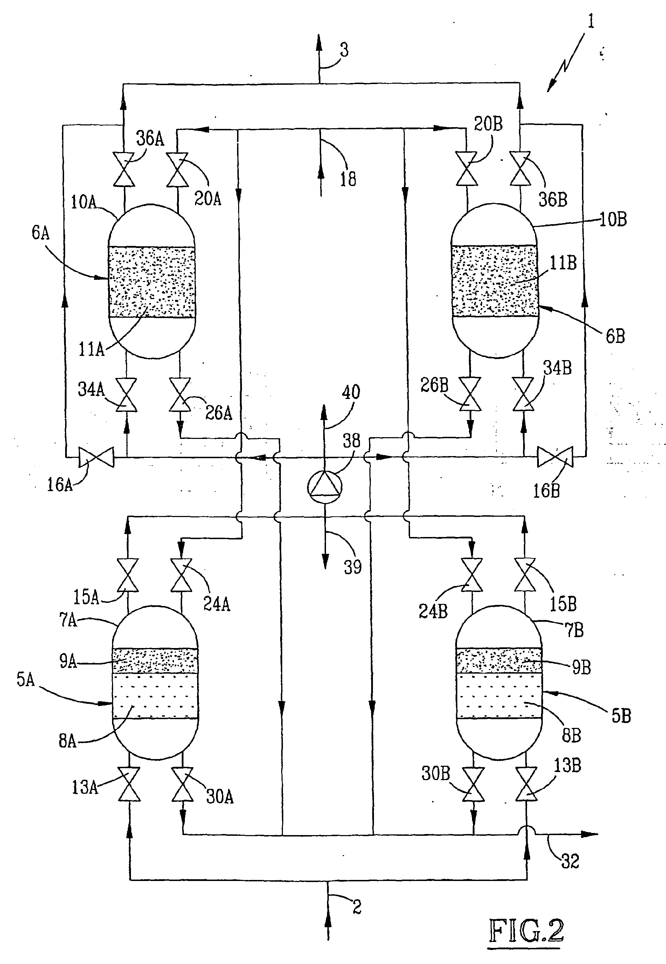

Selon la variante de la figure 2, un compresseur 38 est disposé entre d'une part les vannes 15A et 15B, et d'autre part les vannes 16A, 16B, 34A et 34B, pour comprimer l'air alimentant la ligne 3.

Ce compresseur 38 est, par exemple, couplé à une turbine disposée en aval d'une sortie intermédiaire de la ligne principale d'échange thermique de l'installation de distillation d'air, comme décrit dans les demandes FR-2 674 011, FR-2 701 553 et FR-2 723 184.

Ce compresseur 38 comprime l'air épuré provenant de l'adsorbeur principal 5A au cours de l'étape I, l'air dessiqué provenant de l'adsorbeur principal 5A et alimentant l'adsorbeur auxiliaire 6A au cours de l'étape II, l'air épuré provenant de l'adsorbeur principal 5B au cours de l'étape III, et l'air dessiqué provenant de l'adsorbeur principal 5B et alimentant l'adsorbeur auxiliaire 6B au cours de l'étape IV.

La compression de l'air par le compresseur 38 avant son passage dans les adsorbeurs auxiliaires 6A et 6B au cours des étapes II et IV permet d'améliorer l'adsorption du CO₂ dans ces adsorbeurs.

Des piquages 39 et 40 disposés d'une part entre les vannes 15A et 15B et le compresseur 38, et d'autre part entre le compresseur 38 et les vannes 16A, 16B, 34A et 34B, permettent d'alimenter en air dessiqué des dispositifs non représentés. Ainsi, seule une partie du débit d'air dessiqué par les adsorbeurs principaux 5A et 5B peut être décarbonatée dans les adsorbeurs auxiliaires 6A et 6B.

Selon une autre variante, non représentée, le compresseur 38 est remplacé par une turbine. Cette turbine détend l'air épuré provenant de l'adsorbeur 5A au cours de l'étape I, l'air dessiqué provenant de l'adsorbeur 5A et alimentant l'adsorbeur 6A au cours de l'étape II, l'air épuré provenant de l'adsorbeur 5B au cours de l'étape III, et l'air dessiqué provenant de l'adsorbeur 5B et alimentant l'adsorbeur 6B au cours de l'étape IV.

La détente de l'air par la turbine, et donc son refroidissement, avant son passage dans les adsorbeurs auxiliaires 6A et 6B au cours des étapes Il et IV permet d'améliorer l'adsorption du CO₂ dans ces adsorbeurs.

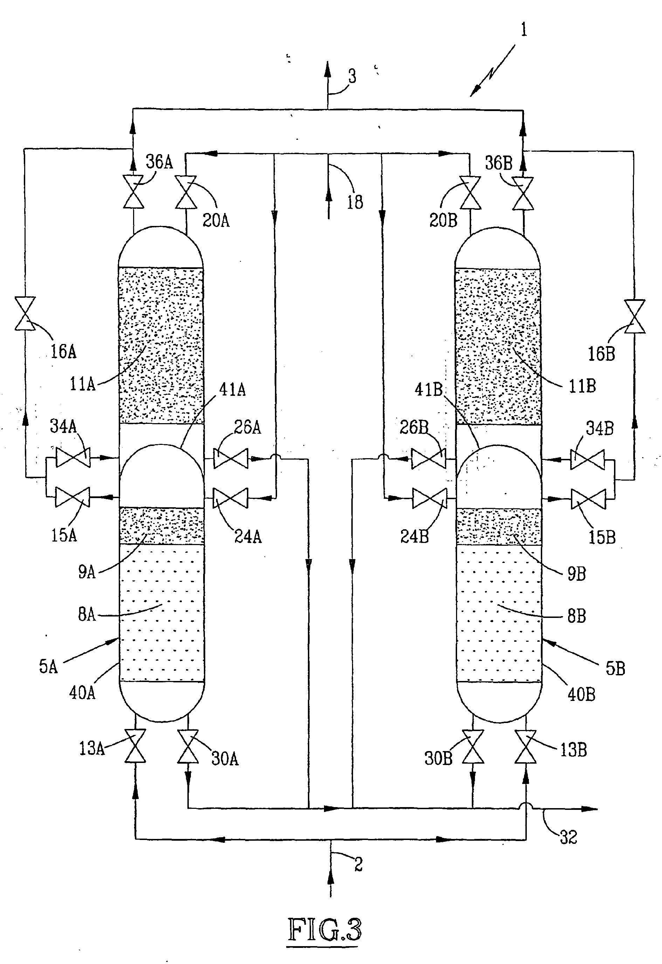

Selon la variante de la figure 3, les adsorbeurs principal et auxiliaire 5A et 6A sont formés dans un même récipient 40A muni d'une cloison intermédiaire intérieure 41A isolant l'adsorbeur principal 5A de l'adsorbeur auxiliaire 6A. L'adsorbeur auxiliaire 6A surmonte l'adsorbeur principal 5A. La cloison 41A est bombée et sa concavité est dirigée vers l'adsorbeur principal 5A.

La structure des adsorbeurs principal 5B et auxiliaire 6B est analogue et se déduit de celle des adsorbeurs 5A et 5B en substituant le suffixe B au suffixe A.

Cette variante permet de réduire le coût de fabrication des adsorbeurs 5A, 5B, 6A et 6B et donc le coût de fabrication de l'installation de distillation d'air.

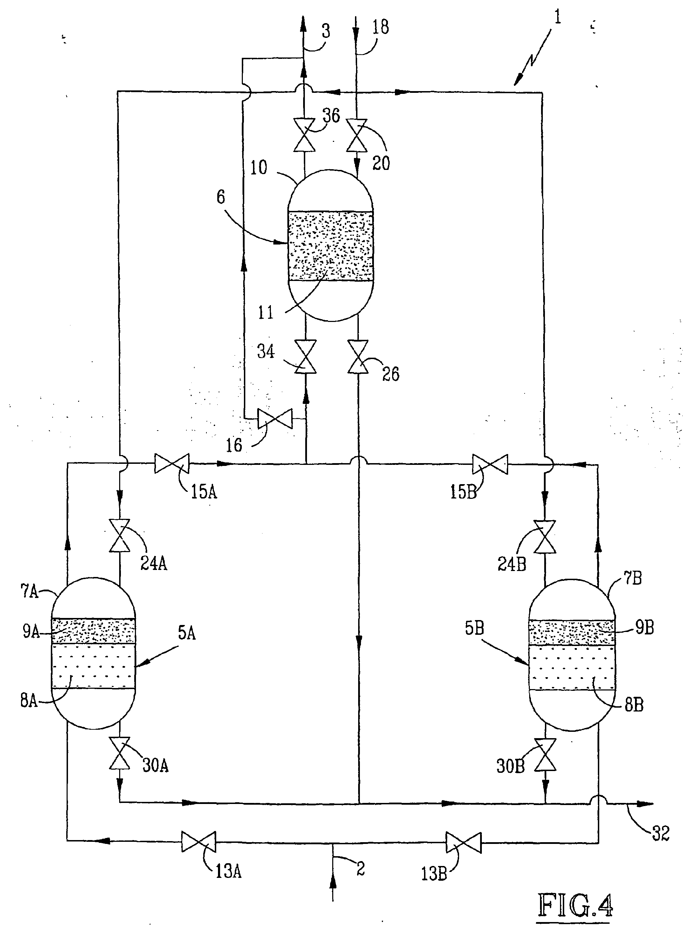

La figure 4 illustre un autre mode de réalisation d'un dispositif d'épuration d'air 1 se distinguant de celui de la figure 1 par le fait que le dispositif d'épuration 1 ne comprend qu'un seul adsorbeur auxiliaire 6. Les références des éléments relatifs à cet adsorbeur auxiliaire 6 seront les mêmes que celles concernant les adsorbeurs 6A et 6B de la figure 1, les suffixes A ou B étant supprimés.

Le cycle du procédé d'épuration mis en oeuvre par ce dispositif d'épuration 1 comprend lui aussi quatre étapes I à IV décrites ci-dessous.

Lors de l'étape I, l'adsorbeur principal 5A est en phase d'adsorption, tandis que les adsorbeurs principal 5B et auxiliaire 6 sont en phase de régénération.

L'air de la ligne 2 est alors amené par la vanne 13A ouverte vers l'adsorbeur principal 5A où il est entièrement décarbonaté et dessiqué. Cet air épuré est ensuite renvoyé via les vannes 15A et 16 ouvertes directement vers la ligne 3.

L'azote résiduaire de la ligne 18 alimente en parallèle l'adsorbeur auxiliaire 6, via la vanne 20 ouverte, et l'adsorbeur principal 5B, via la vanne 24B ouverte.

L'azote résiduaire, transportant le CO₂ et l'H₂O accumulés dans les couches 8B, 9B et 11 lors d'un cycle précédent et désorbés, est renvoyé depuis les adsorbeurs 6 et 5B, via les vannes 26 et 30B, ouvertes vers la ligne 32.

Cette étape I se poursuit jusqu'à ce que la couche 9A soit sensiblement saturée en CO₂ et que l'adsorbeur 5B soit régénéré.

Au cours de l'étape II, l'épuration de l'air est assurée uniquement par l'adsorbeur 5B. L'air de la ligne 2 est alors envoyé vers l'adsorbeur 5B via la vanne 13B ouverte. L'air dessiqué et décarbonaté est ensuite renvoyé directement vers la ligne 3 par l'intermédiaire des vannes 15B et 16 ouvertes.

Les vannes 13A, 15A, 24A et 30A sont fermées de sorte que l'adsorbeur 5A est ni en phase d'adsorption, ni en phase de régénération.

L'adsorbeur auxiliaire 6 est en phase de régénération.

Cette étape II est poursuivie jusqu'à ce que la couche 9B soit sensiblement saturée en CO₂ et que l'adsorbeur auxiliaire 6 soit régénéré.

Au cours de l'étape III, l'air provenant de la ligne 2 est envoyé via la vanne 13A ouverte vers l'adsorbeur principal 5A où il est dessiqué. Ensuite, l'air dessiqué est renvoyé via les vannes 15A et 34 ouvertes vers l'adsorbeur auxiliaire 6 qui assure la décarbonatation de l'air. L'air épuré est ensuite renvoyé directement vers la ligne 3 par l'intermédiaire de la vanne 36 ouverte.

Les adsorbeurs 5A et 6 sont donc en phase d'adsorption pour assurer en série l'épuration de l'air de la ligne 2.

Les vannes 13B, 15B, 24B et 30B sont fermées de sorte que l'adsorbeur auxiliaire 5B n'est ni en phase d'adsorption, ni en phase de régénération.

Cette étape III se poursuit jusqu'à ce que la couche 8A soit sensiblement saturée en H₂O.

Lors de l'étape IV, les adsorbeurs 5B et 6 assurent en série l'épuration de l'air. Le trajet de l'air résiduaire peut être déduit de la description de l'étape III en substituant le suffixe B au suffixe A.

Par ailleurs, l'adsorbeur 5A est en phase de régénération. L'azote résiduaire de la ligne 18 est envoyé alors via la vanne 24A ouverte vers l'adsorbeur principal 5A. L'azote résiduaire transportant l'H₂O et le CO₂ désorbés est ensuite renvoyé via la vanne 30A ouverte vers la ligne 32.

L'étape IV se poursuit jusqu'à ce que la couche 8B soit sensiblement saturée en H₂O.

Le procédé ci-dessus permet d'épurer un débit relativement important d'air avec seulement trois adsorbeurs 5A, 5B et 6. Par conséquent, le coût de fabrication du dispositif d'épuration d'air 1, et donc de l'installation de distillation d'air, est relativement réduit.

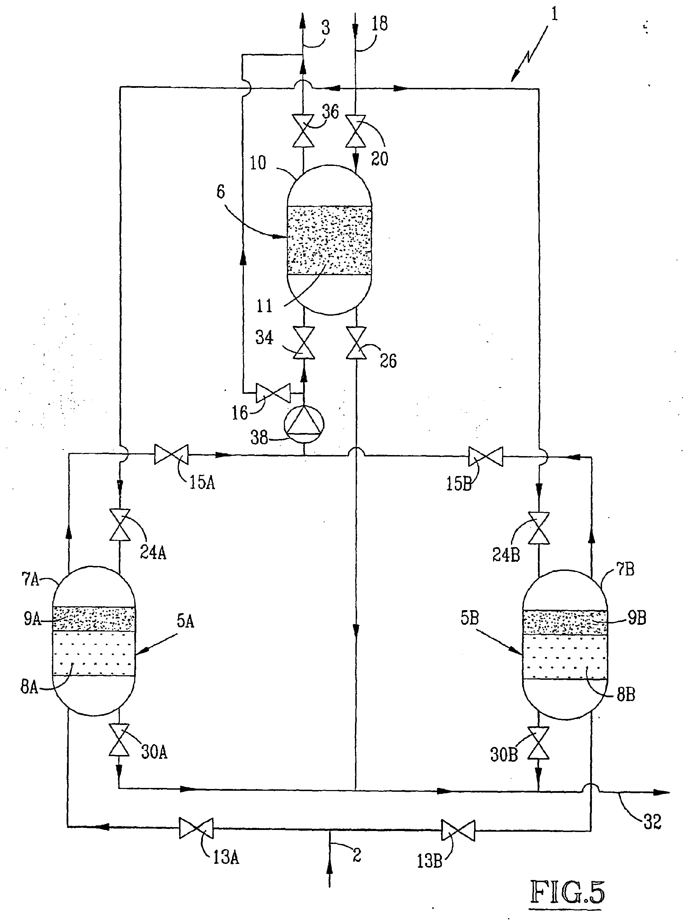

Selon la variante de la figure 5, un compresseur 38 est disposé entre d'une part les vannes 15A et 15B, et d'autre part les vannes 16 et 34. Ce compresseur 38 correspond à celui de la variante de la figure 3.

Le compresseur 38 assure la compression de l'air dessiqué et décarbonaté provenant des adsorbeurs principaux 5A et 5B lors des étapes I et II, et de l'air dessiqué provenant des adsorbeurs principaux 5A et 5B et alimentant l'adsorbeur auxiliaire 6 dans les étapes III et IV.

Comme précédemment, le compresseur 38 peut également être remplacé par une turbine.

## Revendications

1. Procédé d'épuration d'un gaz par adsorption d'une première impureté et d'une deuxième impureté, du type dans lequel on utilise cycliquement plusieurs adsorbeurs (5A, 5B, 6A, 6B ; 5A, 5B, 6) sélectivement en phase d'adsorption et en phase de régénération, **caractérisé en ce que** l'on utilise au moins deux adsorbeurs principaux (5A, 5B) et au moins un adsorbeur auxiliaire (6A, 6B ; 6), **en ce que**, pendant au moins une première étape, on épure le gaz en adsorbant les deux impuretés par passage dans au moins un premier (5A, 5B) des adsorbeurs principaux sans passer par l'adsorbeur auxiliaire ou sans passer par aucun des adsorbeurs auxiliaires, le cas échéant (6A, 6B ; 6), et simultanément on régénère en parallèle le deuxième adsorbeur principal (5A, 5B) et le ou chaque adsorbeur auxiliaire (6A, 6B ; 6), puis, pendant une deuxième étape, on épure au moins une partie du débit du gaz par adsorption des deux impuretés par passage en série dans le premier adsorbeur principal (5A, 5B) et dans le premier adsorbeur auxiliaire (6A, 6B ; 6)

2. Procédé selon la revendication 1, **caractérisé en ce que**, pendant la deuxième étape, on modifie la pression du gaz entre le premier adsorbeur principal (5A, 5B) et le premier adsorbeur auxiliaire (6A, 6B ; 6).

3. Procédé selon la revendication 2, **caractérisé en ce que**, pendant la deuxième étape, on comprime le gaz entre le premier adsorbeur principal (5A, 5B) et le premier adsorbeur auxiliaire (6A, 6B ; 6).

4. Procédé selon l'une quelconque des revendications 1 à 3, **caractérisé en ce qu'**on utilise un seul adsorbeur auxiliaire (6).

5. Procédé selon la revendication 4, **caractérisé en ce qu'**entre la première étape et la deuxième étape, on épure le gaz en adsorbant les deux impuretés par passage dans un deuxième adsorbeur principal (5A, 5B).

6. Procédé selon l'une quelconque des revendications 1 à 3, **caractérisé en ce qu'**on utilise au moins deux adsorbeurs auxiliaires (6A, 6B).

7. Procédé selon l'une quelconque des revendications 1 à 6, **caractérisé en ce qu'**on interrompt la première étape lorsque le premier adsorbeur principal (5A, 5B) est sensiblement saturé en deuxième impureté.

8. Procédé selon l'une quelconque des revendications 1 à 7, **caractérisé en ce que** chaque adsorbeur auxiliaire (6A, 6B ; 6) comprend un garnissage d'adsorption (11A, 11B ; 11) comprenant un matériau adsorbant unique.

9. Procédé selon l'une quelconque des revendications 1 à 8, **caractérisé en ce que** la première impureté est H₂O et la deuxième impureté CO₂.

10. Procédé selon l'une quelconque des revendications 1 à 9, **caractérisé en ce que** le gaz est de l'air.

11. Dispositif d'épuration d'un gaz pour la mise en oeuvre d'un procédé selon l'une quelconque des revendications 1 à 10, **caractérisé en ce qu'**il comprend une ligne (2) d'amenée du gaz à épurer, une ligne (3) d'évacuation du gaz épuré, une ligne (18) d'amenée d'un gaz de régénération, une ligne (32) d'évacuation du gaz de régénération, au moins deux adsorbeurs principaux (5A, 5B) et au moins un adsorbeur auxiliaire (6A, 6B, 6), les adsorbeurs principaux comprenant un garnissage (8A, 8B, 9A, 9B) d'adsorption des première et deuxième impuretés et chaque adsorbeur auxiliaire (6A, 6B ; 6) comprenant un garnissage d'adsorption d'au moins la deuxième impureté, et **en ce que** le dispositif comprend en outre des premiers moyens (15A, 15B, 16A, 16B ; 15, 16) de raccordement, pour raccorder les adsorbeurs principaux (5A, 5B) à la ligne (3) d'évacuation du gaz épuré sans passer par l'adsorbeur auxiliaire ou sans passer par aucun des adsorbeurs auxiliaires, le cas échéant, des deuxièmes moyens (15A, 15B, 34A, 34B ; 15, 34) de raccordement, pour raccorder en série chaque adsorbeur principal (5A, 5B) avec un adsorbeur auxiliaire (6A, 6B, 6), et des troisièmes moyens (20A, 20B, 24A, 24B ; 20, 24A, 24B) de raccordement, pour raccorder en parallèle le ou chaque adsorbeur auxiliaire (6A, 6B ; 6) et au moins un adsorbeur principal (5A, 5B) à la ligne (18) d'amenée du gaz de régénération.

12. Dispositif selon la revendication 11, **caractérisé en ce que** lesdits deuxièmes moyens de raccordement comprennent des moyens (38) pour modifier la pression du gaz.

13. Dispositif selon la revendication 12, **caractérisé en ce que** lesdits deuxièmes moyens de raccordement comprennent des moyens (38) de compression.

14. Dispositif selon l'une quelconque des revendications 11 à 13, **caractérisé en ce qu'**il comprend un seul adsorbeur auxiliaire (6).

15. Dispositif selon l'une quelconque des revendications 11 à 13,
**caractérisé en ce qu'**il comprend au moins deux adsorbeurs auxiliaires (6A, 6B).

16. Dispositif selon l'une quelconque des revendications 11 à 15, **caractérisé en ce que** chaque adsorbeur auxiliaire (6A, 6B ; 6) comprend un garnissage d'adsorption (11A, 11B; 11) comprenant un matériau adsorbant unique.

17. Dispositif selon l'une quelconque des revendications 11 à 16, **caractérisé en ce que** la première impureté est H₂O et la deuxième impureté CO₂.

18. Dispositif selon l'une quelconque des revendications 11 à 17, **caractérisé en ce que** le gaz est de l'air.

## Claims

1. Process for purifying a gas by adsorption of a first impurity and of a second impurity, of the type in which several adsorbers (5A, 5B, 6A, 6B; 5A, 5B, 6) are used cyclically and selectively in the adsorption phase and in the regeneration phase, **characterized in that** at least two main adsorbers (5A, 5B) and at least one auxiliary adsorber (6A, 6B; 6) are used, **in that**, during at least a first step, the gas is purified by adsorbing the two impurities by passing through at least a first (5A, 5B) of the main adsorbers without passing through an auxiliary adsorber (6A, 6B; 6), and **in that** simultaneously the second main adsorber (5A, 5B) and the or each auxiliary adsorber (6A, 6B; 6) are regenerated in parallel, then, during a second step, at least some of the gas flow is purified by adsorption of the two impurities by passing in series through the first main adsorber (5A, 5B) and through the first auxiliary adsorber (6A, 6B; 6).

2. Process according to Claim 1, **characterized in that**, during the second step, the pressure of the gas between the first main adsorber (5A, 5B) and the first auxiliary adsorber (6A, 6B; 6) is changed.

3. Process according to Claim 2, **characterized in that**, during the second step, the gas between the first main adsorber (5A, 5B) and the first auxiliary adsorber (6A, 6B; 6) is compressed.

4. Process according to any one of Claims 1 to 3, **characterized in that** only one auxiliary adsorber (6) is used.

5. Process according to Claim 4, **characterized in that**, between the first step and the second step, the gas is purified by adsorbing the two impurities by passing through a second main adsorber (5A, 5B).

6. Process according to any one of Claims 1 to 3, **characterized in that** at least two auxiliary adsorbers (6A, 6B) are used.

7. Process according to any one of Claims 1 to 6, **characterized in that** the first step is interrupted when the first main adsorber (5A, 5B) is substantially saturated with the second impurity.

8. Process according to any one of Claims 1 to 7, **characterized in that** each auxiliary adsorber (6A, 6B; 6) comprises an adsorption packing (11A, 11B; 11) comprising a single adsorbent material.

9. Process according to any one of Claims 1 to 8, **characterized in that** the first impurity is H₂O and the second impurity CO₂.

10. Process according to any one of Claims 1 to 9, **characterized in that** the gas is air.

11. System for purifying a gas in order to implement a process according to any one of Claims 1 to 10, **characterized in that** it comprises a line (2) for supplying the gas to be purified, a line (3) for discharging the purified gas, a line (18) for supplying a regeneration gas, a line (32) for discharging the regeneration gas, at least two main adsorbers (5A, 5B) and at least one auxiliary adsorber (6A, 6B; 6), the main adsorbers comprising a packing (8A, 8B, 9A, 9B) for adsorbing the first and second impurities, and each auxiliary adsorber (6A, 6B; 6) comprising a packing for adsorbing at least the second impurity, and **in that** the system furthermore comprises first connection means (15A, 15B, 16A, 16B; 15, 16), in order to connect the main adsorbers (5A, 5B) to the line (3) for discharging the purified gas without passing through any of the auxiliary adsorbers, second connection means (15A, 15B, 34A, 34B; 15, 34), in order to connect each main adsorber (5A, 5B) in series with an auxiliary adsorber (6A, 6B, 6), and third connection means (20A, 20B, 24A, 24B; 20, 24A, 24B), in order to connect the or each auxiliary adsorber (6A, 6B; 6) and at least one main adsorber (5A, 5B) in parallel with the line (18) for supplying the regeneration gas.

12. System according to Claim 11, **characterized in that** the said second connection means include means (38) for changing the gas pressure.

13. System according to Claim 12, **characterized in that** the said second connection means include compression means (38).

14. System according to any one of Claims 11 to 13, **characterized in that** it comprises a single auxiliary adsorber (6).

15. System according to any one of Claims 11 to 13, **characterized in that** it comprises at least two auxiliary adsorbers (6A, 6B).

16. System according to any one of Claims 11 to 15, **characterized in that** each auxiliary adsorber (6A, 6B; 6) comprises an adsorption packing (11A, 11B; 11) comprising a single adsorbent material.

17. System according to any one of Claims 11 to 16, **characterized in that** the first impurity is H₂O and the second impurity CO₂.

18. System according to any one of Claims 11 to 17, **characterized in that** the gas is air.

## Patentansprüche

1. Verfahren zum Reinigen eines Gases durch Adsorption einer ersten Verunreinigung und einer zweiten Verunreinigung der Art, bei der zyklisch mehrere Adsorber (5A, 5B, 6A, 6B ; 5A, 5B, 6) selektiv in der Adsorptionsphase und in der Regenerationsphase verwendet werden, **dadurch gekennzeichnet, dass** mindestens zwei Hauptadsorber (5A, 5B) und mindestens ein Hilfsadsorber (6A, 6B; 6) verwendet werden, **dadurch**, dass mindestens während eines ersten Schritts das Gas gereinigt wird, indem die beiden Verunreinigungen durch Passieren mindestens eines ersten (5A, 5B) der Hauptadsorber adsorbiert werden, ohne einen Hilfsadsorber (6A, 6B; 6) zu passieren, und gleichzeitig parallel dazu der zweite Hauptadsorber (5A, 5B) und der oder alle Hilfsadsorber (6A, 6B; 6) regeneriert werden, dann, während eines zweiten Schritts, mindestens ein Teil des Gasstroms durch Adsorption der zwei Verunreinigungen durch nacheinander Passieren des ersten Hauptadsorbers (5A, 5B) und des ersten Hilfsadsorbers (6A, 6B; 6) gereinigt wird.

2. Verfahren nach Anspruch 1, **dadurch gekennzeichnet, dass** während des zweiten Schritts der Gasdruck zwischen dem ersten Hauptadsorber (5A, 5B) und dem ersten Hilfsadsorber (6A, 6B; 6) modifiziert wird.

3. Verfahren nach Anspruch 2, **dadurch gekennzeichnet, dass** während des zweiten Schritts das Gas zwischen dem ersten Hauptadsorber (5A, 5B) und dem ersten Hilfsadsorber (6A, 6B; 6) komprimiert wird.

4. Verfahren nach einem der Ansprüche 1 bis 3, **dadurch gekennzeichnet, dass** ein einziger Hilfsadsorber (6) verwendet wird.

5. Verfahren nach Anspruch 4, **dadurch gekennzeichnet, dass** zwischen dem ersten Schritt und dem zweiten Schritt das Gas gereinigt wird, indem die beiden Verunreinigungen durch Passieren eines zweiten Hauptadsorbers (5A, 5B) adsorbiert werden.

6. Verfahren nach einem der Ansprüche 1 bis 3, **dadurch gekennzeichnet, dass** mindestens zwei Hilfsadsorber (6A, 6B) verwendet werden.

7. Verfahren nach einem der Ansprüche 1 bis 6, **dadurch gekennzeichnet, dass** der erste Schritt unterbrochen wird, wenn der erste Hauptadsorber (5A, 5B) im Wesentlichen mit der zweiten Verunreinigung gesättigt ist.

8. Verfahren nach einem der Ansprüche 1 bis 7, **dadurch gekennzeichnet, dass** jeder Hilfsadsorber (6A, 6B; 6) eine Adsorptionsfüllung umfasst (11A, 11B; 11), die ein einzigartiges adsorbierendes Material umfasst.

9. Verfahren nach einem der Ansprüche 1 bis 8, **dadurch gekennzeichnet, dass** die erste Verunreinigung H₂O und die zweite Verunreinigung CO₂ ist.

10. Verfahren nach einem der Ansprüche 1 bis 9, **dadurch gekennzeichnet, dass** das Gas Luft ist.

11. Vorrichtung zum Reinigen eines Gases zum Einsatz in einem Verfahren nach einem der Ansprüche 1 bis 10, **dadurch gekennzeichnet, dass** sie eine Zuflussleitung (2) für das zu reinigende Gas, eine Abflussleitung (3) für das gereinigte Gas, eine Zuflussleitung (18) für ein Regenerationsgas, eine Abflussleitung (32) für das Regenerationsgas, mindestens zwei Hauptadsorber (5A, 5B) und mindestens einen Hilfsadsorber (6A, 6B, 6) umfasst, wobei die Hauptadsorber eine Adsorptionsfüllung (8A, 8B, 9A, 9B) für die ersten und zweiten Verunreinigungen umfassen und wobei jeder Hilfsadsorber (6A, 6B; 6) eine Adsorptionsfüllung für mindestens die zweite Verunreinigung umfasst, und **dadurch**, dass die Vorrichtung ferner erste Anschlussmittel (15A, 15B, 16A, 16B; 15, 16) umfasst, um die Hauptadsorber (5A, 5B) an die Abflussleitung (3) für das gereinigte Gas anzuschließen, ohne einen der Hilfsadsorber zu passieren, zweite Anschlussmittel (15A, 15B, 34A, 34B; 15, 34), um nacheinander jeden Hauptadsorber (5A, 5B) an einen Hilfsadsorber (6A, 6B, 6) anzuschließen, und dritte Anschlussmittel (20A, 20B, 24A, 24B; 20, 24A, 24B), um parallel den oder jeden Hilfsadsorber (6A, 6B; 6) und mindestens einen Hauptadsorber (5A, 5B) an die Zuflussleitung (18) für das Regenerationsgas anzuschließen.

12. Vorrichtung nach Anspruch 11, **dadurch gekennzeichnet, dass** die zweiten Anschlussmittel Mittel (38) umfassen, um den Gasdruck zu modifizieren.

13. Vorrichtung nach Anspruch 12, **dadurch gekennzeichnet, dass** die zweiten Anschlussmittel Kompressionsmittel (38) umfassen.

14. Vorrichtung nach einem der Ansprüche 11 bis 13, **dadurch gekennzeichnet, dass** sie einen einzigen Hilfsadsorber (6) umfasst.

15. Vorrichtung nach einem der Ansprüche 11 bis 13, **dadurch gekennzeichnet, dass** sie mindestens zwei Hilfsadsorber (6A, 6B) umfasst.

16. Vorrichtung nach einem der Ansprüche 11 bis 15, **dadurch gekennzeichnet, dass** jeder Hilfsadsorber (6A, 6B; 6) eine Adsorptionsfüllung (11A, 11B; 11) umfasst, die ein einzigartiges adsorbierendes Material umfasst.

17. Vorrichtung nach einem der Ansprüche 11 bis 16, **dadurch gekennzeichnet, dass** die erste Verunreinigung H₂O und die zweite Verunreinigung CO₂ ist.

18. Vorrichtung nach einem der Ansprüche 11 bis 17, **dadurch gekennzeichnet, dass** das Gas Luft ist.
